(19) Europäisches Patentamt
European Patent Office
Office européen des brevets

(11) Veröffentlichungsnummer : **0 053 846**
**B1**

(12) # EUROPÄISCHE PATENTSCHRIFT

(45) Veröffentlichungstag der Patentschrift : **05.06.85**

(51) Int. Cl.⁴ : **C 22 B 3/00**, C 01 G 11/00

(21) Anmeldenummer : **81200985.0**

(22) Anmeldetag : **03.09.81**

(54) **Selektive Bindung von Cadmiumionen und Verfahren zur selektiven Entfernung des Cadmiums aus wässrigen Lösungen.**

(30) Priorität : **27.11.80 DE 3044593**

(43) Veröffentlichungstag der Anmeldung : **16.06.82 Patentblatt 82/24**

(45) Bekanntmachung des Hinweises auf die Patenterteilung : **05.06.85 Patentblatt 85/23**

(84) Benannte Vertragsstaaten : **CH DE FR GB LI SE**

(56) Entgegenhaltungen :
**DE-C- 2 434 879**
**US-A- 3 532 490**
**US-A- 3 755 161**
**Die Akte enthält technische Angaben, die nach dem Eingang der Anmeldung eingereicht wurden und die nicht in dieser Patentschrift enthalten sind.**

(73) Patentinhaber : **Rütgerswerke Aktiengesellschaft**
**Mainzer Landstrasse 217**
**D-6000 Frankfurt a.Main 1 (DE)**

(72) Erfinder : **Neunhoeffer, Otto, Prof. Dr.**
**Berliner Strasse 32**
**D-6650 Homburg/Saar (DE)**
Erfinder : **Wilhelm, Gerhard, Dr.**
**Stahlbühlring 80**
**D-6802 Ladenburg (DE)**
Erfinder : **Hockenberger, Lothar, Dr.**
**Brahmsstrasse 13**
**D-6700 Ludwigshafen (DE)**
Erfinder : **Bergmann, Franz Josef, Dr.**
**Südring 63**
**D-6941 Laudenbach (DE)**
Erfinder : **Endruscheit, Peter**
**Kohlklinge 11**
**D-6940 Weinheim (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 053 846 B1

**Beschreibung**

Die Erfindung betrifft die selektive Bindung von Cadmiumionen mittels bestimmter organischer schwefelhaltiger Produkte und ein Verfahren zur Entfernung des Cadmiums aus wäßrigen Lösungen, insbesondere aus Abwasser.

Cadmium und Cadmiumverbindungen sind hochtoxische Stoffe, die wahrscheinlich auch eine carcinogene Wirkung haben. Ihre toxicologische Bedeutung ist umso größer, als sich Cadmium in Leber und Nieren kumuliert.

Andererseits spielt Cadmium eine wichtige Rolle als Korrosionsschutz für Eisen, als Legierungsbestandteil in verschiedenen Lot- und Lagermetallen, in Batterien, zur Herstellung von Pigmenten oder aber auch in Kunststoffen, bei denen häufig Cadmiumseifen als Stabilisatoren eingesetzt werden. Die sich daraus ergebende weite Verbreitung des Cadmiums bedingt, daß man diesem Metall und seinen Salzen im Rahmen des Umweltschutzes eine besondere Bedeutung schenken muß und man ist bestrebt, die Umweltbelastung möglichst gering zu halten, d. h. man versucht, Cadmiumionen aus Abwässern zu entfernen. Die bisherigen Verfahren hierzu beruhen meist auf einer Fällung mit Alkalihydroxid oder -carbonat, d. h. einer Alkalisierung der Abwässer oder auf einer Kollektorfällung mit Strontiumphosphat. Abgesehen davon, daß derartige Fällungsreagenzien im Überschuß zugegeben werden müssen und ihrerseits wieder zu einer Umweltbelastung beitragen, sind diese Verfahren recht aufwendig. Zudem folgt, daß die ausgefällten Cadmiumverbindungen auch abfiltriert werden müssen. Eine gemeinsame Filtration mit dem Klärschlamm scheidet aus, da dann der Klärschlamm mit Cadmium verseucht ist und auf einer Sondermülldeponie abgelagert werden muß.

Eine Entfernung des Cadmiums aus Abwasser mittels einfacherer Methoden wie z. B. mittels Ionenaustauscher oder chelatbildenden Polymeren scheitert daran, daß die Cadmiummengen im Abwasser doch relativ gering sind gegenüber denen anderer Metallionen und von Ionenaustauschern nicht selektiv abgetrennt werden können und daß die Kapazität derartiger Schwermetallabsorber zu gering ist.

So ist bekannt, daß Merkaptoverbindungen mit vielen Metallionen Salze bilden und somit diese Metalle binden. Dieser Effekt wird auch gemäß der Lehre der DE-OS 25 35 617 genutzt. Dabei können auch Cadmiumionen durch Mercaptogruppen gebunden werden. Diese Bindung ist allerdings nicht selektiv.

Die aus DE-A-2 434 879 bekannte Absorption von Schwermetallen an Polythiurampolysulfidverbindungen läßt keine selektive Absorption von Cadmium erkennen. Hier wirken offensichtlich die vorhandenen Dithiocarbamatgruppen komplexbildend auf eine große Anzahl von Schwermetallionen, wobei lediglich in unterschiedlichen pH-Bereichen die Affinitäten zu den verschiedenen Schwermetallen variieren.

Es bestand daher die Aufgabe, einen Stoff zu finden, der Cadmiumionen selektiv bindet, der eine große Absorptionskapazität hat und mit dem man in einfacher Weise Cadmiumionen selektiv aus Abwasser entfernen kann.

Die Lösung dieser Aufgabe liegt in der Verwendung von wasserunlöslichen organischen Polysulfiden mit Ausnahme von Polythiurampolysulfidverbindungen zur selektiven Bindung von Cadmiumionen und in einem Verfahren zur selektiven Entfernung von Cadmiumionen aus Abwasser, dadurch gekennzeichnet, daß man das cadmiumhaltige Wasser in innigen Kontakt mit wasserunlöslichen, organischen Polysulfiden bringt.

Es wurde nun gefunden, daß Polysulfidverbindungen, ausgenommen Polythiurampolysulfidverbindungen, Cadmiumionen mit hoher Selektivität und mit hoher Beladungskapazität binden, wenn man diese Verbindungen innig mit Wasser vermischt, in dem Cadmiumsalze allein oder zusammen mit anderen Salzen gelöst sind. Zwar werden auch andere Schwermetallionen wie z. B. $Hg^{++}$ oder $Pb^{++}$ absorbiert, jedoch in weit geringerem Maße als Cadmiumionen. Leichte Metallionen wie Alkali- oder Erdalkalimetallionen werden von diesen Polysulfidverbindungen praktisch nicht gebunden.

Man kann somit Cadmium selektiv aus wäßrigen Lösungen abtrennen, auch wenn diese nur verhältnismäßig geringe Cadmiumkonzentrationen enthalten, wenn man die cadmiumhaltige wäßrige Lösung mit einer entsprechenden organischen Polysulfidverbindung in innigen Kontakt bringt und nach einer Einwirkungszeit, in der die Cadmiumionen an die Schwefelgruppen gebunden werden, die wäßrige Phase wieder von der organischen abtrennt. Die Abtrennung kann in einfacher Weise durch Schwerkraftabsetzen erfolgen. Dabei kann man sowohl flüssige als auch feste organische Polysulfidverbindungen einsetzen. Zu beachten ist lediglich, daß sich diese Verbindungen nicht in Wasser lösen. Um auch ein Lösen von Spuren der Schwefelverbindung auszuschließen, empfehlen sich Polysulfide mit hohem Molekulargewicht. Bevorzugt lassen sich Polysulfidoligomere oder -polymere einsetzen, die aufgrund ihres hydrophoben Verhaltens eine besonders einfache Wiederabtrennung des Abwassers ermöglichen, sich andererseits aber durch eine Vielzahl an Di-, Tri- oder sogar Tetrasulfidgruppen besonders für eine Bindung von Cadmiumionen eignen und eine hohe Bindungskapazität für Cadmium haben.

Das einfachste Verfahren bei Verwendung flüssiger Di- oder Polysulfidverbindungen besteht darin, diese mit der wäßrigen Lösung zu verquirlen, d. h. so stark zu rühren, daß die organische Phase in feinen

Tröpfchen verteilt mit der wäßrigen Phase vermischt wird. Die Einwirkungszeit richtet sich dabei nach dem Verhältnis aus Menge und Kapazität der organischen Schwefelverbindung zur Menge an Cadmiumionen in der wäßrigen Lösung. Sie beträgt bei den üblicherweise in Abwasser auftretenden Konzentrationen 10-30 min. Danach läßt man die beiden Phasen sich entmischen und trennt die cadmiumfreie wäßrige Lösung ab.

Daneben lassen sich auch andere Flüssigkeitsextraktionsverfahren im Gleich- oder Gegenstromverfahren anwenden, wie z. B. die Extraktion im Schlaufenreaktor, Gleichstrommischer, Scheibenextraktor oder in der Pulsationskolonne.

Ebenso wie flüssige können auch feste, feinverteilte organische Polysulfidverbindungen zur selektiven Entfernung von Cadmium aus wäßrigen Lösungen verwendet werden. Entscheidend für das Absorptionsvermögen der festen Polysulfidpolymere, das geringer ist als das der flüssigen Polysulfide, ist eine möglichst große Oberfläche. Dabei ist allerdings zu beachten, daß Polysulfidpolymere, die durch Oxidation der Mercaptogruppen von Polysulfidoligomeren mit Schwermetalloxiden oder anderen sauerstoffverbindungen gehärtet wurden, nicht mehr absorptiv wirksam sind.

## Beispiele

### Beispiel 1

100 mg Cadmiumacetat wurden in 1 l destilliertem Wasser gelöst. Zu dieser Lösung wurden 100 g eines flüssigen Polysulfdpolymers gegeben und intensiv bei Raumtemperatur gerührt. Das Polysulfidpolymer hat eine durchschnittliche Struktur entsprechend der Formel

$$HS(-C_2H_4-O-CH_2-O-C_2H_4-S-S)_{23}-C_2H_4-O-CH_2-O-C_2H_4-SH$$

mit etwa 0,5 % Quervernetzung. Es hat ein mittleres Molekulargewicht von 4 000, eine Viskosität bei 27 °C von 35-40 Pas und einer Dichte von 1 270 kg/m$^3$. Nach 15 min wurde das Rühren abgestellt. In der sich sofort abtrennenden wäßrigen Phase ließ sich mit Dithizon kein $Cd^{++}$ mehr nachweisen, d. h. die Cadmiumkonzentration lag unter 0,01 mg $Cd^{++}$/l.

### Beispiel 2

Eine Lösung von 100 mg Cadmiumacetat in 1 l destilliertem Wasser wurden bei Raumtemperatur mit 100 g eines festen, pulversierten Polysulfidkautschuks vermischt.

Der Polysulfidkautschuk ist ein hochmolekulares Polysulfidpolymer, hergestellt durch Umsetzung von Natriumpolysulfid mit Dichloräthan und hat eine durchschnittliche Struktur entsprechend der Formel

$$HO(-C_2H_4-S_4)_n-C_2H_4-OH$$

Es hat einen Schwefelgehalt von 84 Gew.-%.

Das Polymer wurde in der wäßrigen Lösung zwei Stunden lang dispergiert und anschließend abfiltriert. Im Filtrat ließen sich mit Dithizon nur noch Spuren von Cadmium nachweisen.

### Beispiel 3

Eine Lösung von 5 g Cadmiumacetat in 1 l destilliertem Wasser wurde bei Raumtemperatur mit 100 g eines flüssigen Polysulfidoligomers intensiv verrührt.

Das Polysulfidoligomer hat eine durchschnittliche Struktur entsprechend der Formel

$$HS(-C_2H_4-O-CH_2-O-C_2H_4-S-S)_8-C_2H_4-O-CH_2-O-C_2H_4-SH$$

mit etwa 2 % Quervernetzung. Es hat ein mittleres Molekulargewicht von 1 000, eine Viskosität bei 27 °C von 0,7-1,2 Pas und eine Dichte von 1 270 kg/m$^3$.

Nach einer Mischzeit von 1 h lag die Cadmiumkonzentration in der wäßrigen Lösung bei 3 mg/l.

### Beispiel 4

Eine Lösung von 10 g Cadmiumacetat in 1 l Wasser wurde bei Raumtemperatur mit 100 g eines flüssigen Polysulfidoligomers analog Beispiel 3 intensiv verrührt. Nach einer Mischzeit von 16 h lag die Cadmiumkonzentration in der wäßrigen Lösung bei 3 mg/l.

Das Polysulfidoligomer hatte sich als pastöse Masse am Boden des Mischgefäßes abgesetzt.

### Beispiel 5

1 l einer schwach sauren (pH 4), wäßrigen Lösung, enthaltend 1 g Cadmiumacetat, 1 g Kaliumchlorid,

1 g Calciumchlorid und 1 g Eisen(III)-chlorid wurde bei Raumtemperatur mit 100 g eines flüssigen Polysulfidoligomers analog Beispiel 3 intensiv vermischt. Nach einer Mischzeit von 15 min lag die Cadmiumkonzentration bei 5 mg/l, nach weiteren 45 min bei 1 mg/l. Bei anderen Kationen konnte keine nennenswerte Absorption festgestellt werden.

**Patentansprüche**

1. Verwendung von wasserunlöslichen organischen Polysulfidverbindungen mit Ausnahme von Polythiurampolysulfidverbindungen zur selektiven Bindung von Cadmiumionen.

2. Verfahren zur selektiven Entfernung von Cadmiumionen aus wäßrigen Lösungen, dadurch gekennzeichnet, daß man die cadmiumhaltige wäßrige Lösung mit einer oder mehreren wasserunlöslichen, organischen Polysulfidverbindung(en) gemäß Anspruch 1 in innigen Kontakt bringt und danach abtrennt.

3. Verfahren nach Anspruch 2, dadurch gekennzeichnet, daß als wasserunlösliche, organische Polysulfidverbindungen flüssige Polysulfidoligomere oder -polymere verwendet werden.

4. Verfahren nach Anspruch 2 und 3, dadurch gekennzeichnet, daß eine cadmiumhaltige Lösung durch flüssige Polysulfidverbindungen im Gleich- oder Gegenstromverfahren extrahiert wird.

**Claims**

1. The application of water insoluble organic polysulfide compounds except of polythiuram polysulfide compounds for selective binding of cadmium ions.

2. The process for the selective removal of cadmium ions from aqueous solutions comprising bringing the cadmium containing aqueous solution in close contact with one or several water insoluble organic polysulfide(s) according to claim 1 and separating it.

3. The process of claim 2, wherein as water insoluble organic polysulfide compounds liquid polysulfide oligomers or polymers are used.

4. The process of claim 2 and 3, wherein a cadmium containing solution is extracted by liquid polysulfide compounds in a concurrent or counter current flow.

**Revendications**

1. Application de polysulfures organiques insolubles dans l'eau pour la fixation sélective d'ions cadmiums.

2. Procédé pour éliminer sélectivement des ions cadmiums de solutions aqueuses, procédé caractérisé en ce qu'on met la solution aqueuse contenant du cadmium en contact intime pendant un court moment avec un ou plusieurs polysulfures organiques insolubles dans l'eau.

3. Procédé selon la revendication 2, caractérisé en ce qu'on utilise comme polysulfures organiques insolubles dans l'eau des polysulfures oligomères ou polymères liquides.

4. Procédé selon l'une des revendications 2 et 3, caractérisé en ce qu'on soumet une solution contenant du cadmium à une extraction par des polysulfures liquides, à courants de même sens ou à contre-courant.